# EUROPÄISCHE PATENTSCHRIFT

(11) **EP 0 322 529 B1**
(45) Veröffentlichungstag und Bekanntmachung des Hinweises auf die Patenterteilung: **22.02.1995**
(21) Anmeldenummer: 88117442.9
(22) Anmeldetag: 24.11.1984
(51) Int. Cl.: C08J 7/04, C09D 167/02

(54) **Polyesterfolie mit einer als Haftvermittler für Metall wirkenden Copolyesterbeschichtung**
Polyester film with a copolyester coating acting as a metal adhesion mediator
Pellicule de polyester comportant un revêtement de copolyester modifiant l'adhérence aux métaux

(30) Priorität: 05.12.1983 US 558126
(43) Veröffentlichungstag der Anmeldung: 05.07.1989
(62) Teilanmeldung aus: 84114205.2
(73) Patentinhaber: HOECHST CELANESE CORPORATION, Somerville, N.J. 08876 (US)
(72) Erfinder: Funderburk, F. Gene, Taylors South Carolina 29687 (US); Culbertson, Edwin C., Greer South Carolina 29651 (US); Posey, Robert G., Taylors South Carolina 29687 (US)
(74) Vertreter: Güthlein, Paul, Dr.

(56) Entgegenhaltungen:
- EP-A- 0 029 620
- FR-A- 2 086 447
- US-A- 3 563 942
- US-A- 3 779 993
- US-A- 4 016 305

## Beschreibung

Die vorliegende Erfindung betrifft eine selbsttragende orientierte Kunststoffolie, z.B. eine Polyesterfolie, die ein- oder beidseitig eine Polyesterbeschichtung trägt, um das Haftungsvermögen der Polyesterfolie gegenüber Metallen, die nach der Technik der Vakuumaufdampfung auf die Folie aufgebracht werden, zu verbessern, wobei die Folie durch Schmelzextrusion, zunächst als amorphe Kunststofffolie hergestellt wird, die danach durch Strecken in wenigstens eine Richtung orientiert wird, und wobei die Polyesterbeschichtung als wäßrige Dispersion auf die Folie entweder vor der Streckung oder nach der Streckung in eine Richtung, aber vor der Streckung in eine andere Richtung, aufgebracht wird.

Orientierte Kunststoffolie, insbesondere biaxial orientierte Folie aus Polyethylenterephthalat (PET), wird in großem Umfang als Verpackungsmaterial für eine Vielzahl von Produkten, u.a. auch für Lebensmittel, verwendet.

Für Verwendungszwecke, wie z.B. als Etiketten, Abziehetiketten, Folie für getönte Fensterscheiben, Verpackungsfolien, dekorative Produkte und Mikrofilm, ist in vielen Fällen metallbeschichtete Kunststoffolie an die Stelle von Metallfolien, z.B. Aluminiumfolie, getreten. Die Metallfolien sollen u.a. verhindern, daß Produkte, die entweder in bestimmten Speiseölen zubereitet oder damit serviert werden, durch Autooxidation ranzig zu werden beginnen, indem sie das Eindringen von sichtbarem Licht und UV-Licht verhindern. Mit einer dünnen Metallschicht versehenes PET ergibt ein stabiles, elastisches Verpackungsmaterial, das bei erheblich geringeren Kosten die allen PET-Verpackungen gemeinsame vorteilhafte Sperrwirkung gegenüber Sauerstoff und Feuchtigkeit und gleichzeitig auch die bei allen Verpackungen aus Metallfolie vorhandene Sperrwirkung gegen sichtbares Licht und UV-Licht aufweist. Bei vielen Anwendungen kann jedoch die Verbindung Metall/Folie versagen, weil die Trägerschicht aus Kunststoffolie elastisch ist und dazu führt, daß sich das Metall von der Folie ablöst.

Aus der GB-PS 1 370 893 ist als eine Möglichkeit zur Verbesserung der Haftung des Metalls an der PET-Folie das Erhitzen der beschichteten Folie bekannt. Diese Methode hat aber den Nachteil, daß die für das Verfahren geeigneten Temperatur- und Zeitfaktoren erst experimentell ermittelt werden müssen, bevor überhaupt eine metallisierte Folie hergestellt werden kann. Als weitere Möglichkeit beschreibt die EP-A-0 023 389 das Beschichten von Polyesterfolie mit einer Schicht aus einem statistischen Copolymeren von Ethylen mit 0,5 bis 15 Gew.-% eines 3 bis 6 C-Atome enthaltenden Alphamonoolefins. Verglichen mit unbeschichtetem PET weisen PET-Folien mit dieser Art von Beschichtung zwar eine gewisse Verbesserung der Metallhaftung auf, sie zeigen jedoch auch ein unerwünschtes Beschichtungsmuster. Die möglichen Mechanismen der Metallhaftung an Polymeroberflächen sind z.B. in den folgenden Veröffentlichungen erörtert:
1. J.M. Burkstrand: "Chemical Interactions at Polymer Metal Interfaces and Correlations with Adhesion" ("Chemische Wechselwirkungen an den Grenzflächen zwischen Polymerem und Metall und Wechselbeziehungen mit der Haftung"), Fünfte Jahresversammlung der Adhesion Society, Mobile, Alabama, vom 22. bis 24. Februar 1982, veröffentlicht von der Adhesion Society, Mobile, Alabama, 1982, 10a-10c;
2. J.M. Burkstrand: "Metal-Polymer Interfaces: Adhesion and X-ray Photoemission Studies" ("Grenzflächen zwischen Metallen und Polymeren: Untersuchungen über Haftung und Röntgen-Photoemission"), erschienen in Journal of Applied Physics, Band 52, Nr. 7, Juli 1981, 4795-4800; und
3. J.M. Burkstrand: "Hot Atom Interactions with Polymer Surfaces" ("Wechselwirkungen zwischen heißen Atomen und Polymeroberflächen"), erschienen in Journal of Vacuum Science and Technology, 21 (1), Mai/Juni 1982, 70-73.

Es ist bekannt, von Sulfoisophthalsäure abgeleitete Polyester- oder Copolyesterbeschichtungen gemäß US-PS 4,252,885 oder Beschichtungen aus 20 bis 60 Mol-% Isophthalsäure, 6 bis 10 Mol-% Sulfoisophthalsäure und Terephthalsäure als übrigem Bestandteil gemäß EP-A-0 029 620 herzustellen. Diese Veröffentlichungen aus dem Stand der Technik betreffen jedoch beide die Herstellung von fotografischen Filmen.

Die US-PS 3,563,942 beschreibt weiterhin eine wäßrige Dispersion aus einem Polymeren bestehend aus Terephthal- und/oder Isophthalsäure, einer gesättigten aliphatischen Dicarbonsäure, wie z.B. Sebacinsäure, und etwa 0,5 bis 2,5 Mol-% eines Sulfomonomeren, wie z.B. Natrium-5-sulfoisophthalsäure mit einem Di- oder Triglykol. Ähnliche Stoffe sind auch aus US-PS 3,779,993 bekannt und sollen als Schmelzkleber geeignet sein. Nach der Lehre dieser beiden Patente werden derartige Copolyester als Kleber für verschiedene Träger wie z.B. Papier, Metall und Kunststoffolie eingesetzt, und es wird allgemein die Bildung von Laminaten aus verschiedenen Kunststoff-, Papier- und Metallschichten unter Verwendung der Copolyester als Klebemittel vorgeschlagen. Keines der beiden Patente beschreibt jedoch spezielle Copolyesterrezepturen, die die Haftung von Metallen, die nach einem Metallisierungsverfahren auf Träger aus Kunststoffolie aufgebracht wurden, erheblich verbessern.

Der vorliegenden Erfindung lag die Aufgabe zugrunde, ein Beschichtungsmaterial für selbsttragende orientierte Folien aus thermoplastischem Kunststoff, insbesondere biaxial orientierte Polyethylenterephthalatfolie, zu schaffen, durch das die Haftung dieser Folien gegenüber Beschichtungen, die nach einem Metallisierungsverfahren aufgebracht werden, verbessert wird. Außerdem soll eine metallisierte Kunststoffolie bereitgestellt werden, die sich insbesondere für Verpackungszwecke sowie für die Herstellung von Sonnenlichtfiltern eignet.

Gelöst wird diese Aufgabe durch eine Folie der eingangs genannten Gattung, deren kennzeichnende Merkmale darin zu sehen sind, daß die Polyesterbeschichtung aus dem Kondensationsprodukt der folgenden Monomeren bzw. deren zur Bildung von Polyestern befähigten Derivaten besteht:
A) bis zu 95 Mol-% Isophthalsäure;
B) 5 bis 15 Mol-% eines Sulfomonomeren enthaltend eine Alkalimetallsulfonatgruppe an dem aromatischen Teil einer aromatischen Dicarbonsäure;
C) die zur Bildung von 100 Mol-% Kondensat notwendige stöchiometrische Menge wenigstens eines copolymerisierbaren aliphatischen oder cycloaliphatischen Glykols mit 2 bis 11 Kohlenstoffatomen;
wobei die Prozentangaben jeweils bezogen sind auf die Gesamtmenge der die Polyesterbeschichtung bildenden Monomeren, und die Polyesterbeschichtung eine Trockendicke aufweist im Bereich von 0,0025 bis 0,254 »m bevorzugt von 0,02 bis 0,051 »m.

Zu den Trägermaterialien aus Kunststoffolie, die grundierbeschichtet werden können, um erfindungsgemäß eine verbesserte Metallhaftung zu erzielen, zählen bekannte orientierte Folien, z.B. aus Polyester, Polyamiden, Polyolefinen wie kristallisierbares Polypropylen und Polyethylen, Polycarbonaten, Polysulfonen und ähnlichen bekannten Materialien. Die Erfindung wird anhand einer Trägerfolie aus Polyester, genauer gesagt aus Polyethylenterephthalat, erläutert, sie eignet sich jedoch ebenso zur Anwendung mit Polyesterfolie auf Basis eines kristallisierbaren Polymeren, das erhalten wird durch die Polykondensation eines Glykols, wie z.B. Ethylenglykol oder Butandiol und deren Gemischen mit Terephthalsäure und anderen Dicarbonsäuren, wie z.B. Isophthalsäure, Diphensäure und Sebacinsäure oder deren Polyester bildenden Äquivalenten, wobei diese Polyester nach bekannten Verfahren hergestellt werden.

Die erfindungsgemäßen Beschichtungscopolyester werden wie bereits angegeben durch Polykondensation von (A) Isophthalsäure, (B) einem Sulfomonomeren enthaltend eine Alkalimetallsulfonatgruppe an dem aromatischen Teil einer aromatischen Dicarbonsäure und (C) wenigstens einem aliphatischen oder cycloaliphatischen Alkylenglykol mit 2 bis 11 Kohlenstoffatomen hergestellt. Die insgesamt anwesenden Säureäquivalente sollen auf molarer Basis im wesentlichen den insgesamt anwesenden Glykoläquivalenten entsprechen.

Beispiele für Sulfomonomere, die eine Metallsulfonatgruppe an dem aromatischen Teil einer aromatischen Dicarbonsäure (Komponente B) enthalten, sind solche Monomere, die der folgenden allgemeinen Formel entsprechen: 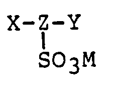
In dieser Formel ist
- M: ein einwertiges Kation eines Alkalimetalls,
- Z: ein dreiwertiger aromatischer Rest, und
- X und Y: sind Carboxylgruppen oder Polyester bildende Äquivalente.

Monomere dieser Art sind in den US-PSen 3,563,942 und 3,779,993 beschrieben. Beispiele solcher Monomeren sind Natrium-sulfoterephthalsäure, Natrium-5-sulfoisophthalsäure, Natrium-sulfophthalsäure, 5-(p-Natriumsulfophenoxy)-isophthalsäure, 5-(Natrium-sulfopropoxy)-isophthalsäure und dergleichen Monomere sowie deren zur Bildung von Polyestern befähigte Derivate, wie z.B. die Dimethylester. M ist vorzugsweise Na⁺, Li⁺ oder K⁺.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu diesen Gruppen zählen Carboxylgruppen sowie deren niedere Alkylester, z.B. Dimethylterephthalat, Diethylterephthalat und zahlreiche andere entsprechende Ester, Halogenide oder Salze. Bevorzugt werden die Säuremonomeren als Dimethylester verwendet, da auf diese Weise die Kondensationsreaktion besser gesteuert werden kann.

Als Komponente C geeignete Glykole sind z.B. Ethylenglykol, 1,5-Pentandiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester können durch bekannte Polymerisationstechniken hergestellt werden. Im allgemeinen wird so verfahren, daß die Säurekomponenten mit Glykol zusammengebracht und in Anwesenheit eines Veresterungskatalysators erhitzt werden, mit anschließender Zugabe eines Polykondensationskatalysators.

Es hat sich gezeigt, daß die verhältnismäßigen Anteile der Komponenten A, B und C, die zur Herstellung der erfindungsgemäßen Polyesterbeschichtungen eingesetzt werden, entscheidend für das Erzielen eines beschichteten Folie mit zufriedenstellender Haftung gegenüber einem nach Metallisierungsverfahren aufgebrachten Metall sind.

Das die Komponente B bildende Monomere soll in einer Menge von wenigstens 5 Mol-% in diesem System enthalten sein, damit die Grundierung mit Wasser dispergierbar wird. Bevorzugt liegt die Menge an Monomeren der Komponente B bei etwa 6,5 bis 12 Mol-%.

Die Glykolkomponente ist in ungefähr stöchiometrischer Menge anwesend.

Die für die Zwecke dieser Erfindung geeigneten Copolyesterbeschichtungen zeichnen sich weiterhin dadurch aus, daß sie eine Säurezahl unter 10, vorzugsweise von 0 bis 3, ein mittleres Mol-Gewicht unter etwa 50.000 und einen RV-Wert (relative Viskosität, gemessen mit einem Kapillarviskosimeter nach Ubbelohde an einer 1%igen Lösung in Dichloressigsäure bei 25^{o}C) im Bereich von etwa 30 bis 700, vorzugsweise etwa 350 bis 650, aufweisen.

Die Folie kann nach bekannten Verfahren und mit bekannten Vorrichtungen hergestellt werden. Es wird z.B. eine Polyesterschmelze bereitet, die als amorphe Folie auf eine hochglanzpolierte rotierende Gießwalze extrudiert wird, wo sie sich zur gegossenen Folie verfestigt. Die Folie wird anschließend axial gestreckt, und zwar bei einer monoaxial orientierten Folie in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Beim ersten an der gegossenen Folie durchgeführten Streckschritt kann beliebig in einer dieser beiden rechtwinklig zueinander verlaufenden Richtungen gestreckt werden. Der Verstreckungsgrad, durch den die Folie Festigkeit und Zähigkeit erhält, kann etwa das 3- bis 5fache der ursprünglichen Abmessung der gegossenen Folie in einer oder beiden Richtungen betragen. Vorzugsweise liegt der Verstreckungsgrad im Bereich zwischen etwa dem 3,2- und 4,2fachen der ursprünglichen Abmessung. Die Streckvorgänge werden bei Temperaturen im Bereich etwa ab der Glasübergangstemperatur bis zu der Temperatur, bei der das Polymere weich wird und schmilzt, durchgeführt.

Nach dem Strecken wird die Folie, falls erforderlich, für die zur Kristallisation des Polyesters notwendige Dauer wärmebehandelt. Durch die Kristallisation erhält die Folie Festigkeit und gute Zugfestigkeitseigenschaften. Die Wärmebehandlung von Polyethylenterephthalat wird bei einer Temperatur im Bereich zwischen etwa 190 und 240^{o}C, vorzugsweise zwischen etwa 215 und 235^{o}C, durchgeführt.

Die erfindungsgemäße Copolyesterbeschichtung in Form einer wäßrigen Dispersion kann in jedem Stadium der Folienherstellung in-line aufgebracht werden, und zwar im Stadium vor dem Strecken zum Zeitpunkt zwischen dem Vergießen der amorphen Folie und dem ersten Strecken, wie es z.B. in GB-PS 1,411,564 beschrieben ist, oder im Stadium zwischen den Streckvorgängen, d.h. nach dem uniaxialen Strecken, jedoch vor dem biaxialen Strecken, wie es z.B. in US-PS 4,214,035 beschrieben ist. Die der Folie während des Streckens oder den abschließenden Konditionierstufen zugeführte Wärme reicht normalerweise aus, um das Wasser und andere flüchtige Bestandteile aus der Beschichtung zu vertreiben und diese zu trocknen. Die Beschichtung kann auch nach den Streckvorgängen (off-line) auf die fertige biaxial orientierte Folie aufgebracht werden. Bei einem solchen Auftragsverfahren ist ein gesonderter Trocknungsschritt erforderlich.

In einer bevorzugten Ausführung wird die Beschichtung nach dem uniaxialen Strecken der Folie, d.h. nach dem Strecken der Folie in einer Richtung, jedoch vor dem Strecken in der im rechten Winkel dazu verlaufenden Richtung, aufgebracht. In einer besonders bevorzugten Ausführung wird die Polyesterfolie vor dem Beschichten zunächst in Längsrichtung gestreckt. In dieser bevorzugten Ausführung wird die Folie vor dem Querstrecken nach einem der auf diesem Gebiet angewendeten bekannten Verfahren beschichtet. Das Beschichten kann z.B. durch Walzenbeschichtung, Sprühbeschichtung, Schlitzgießerantrag oder Tauchbeschichtung erfolgen. Bevorzugt wird die Polyesterfolie mit Gravurwalzen beschichtet. Vor dem Beschichten wird die uniaxial gestreckte Folie vorzugsweise noch in bekannter Weise einer Coronabehandlung in einer Coronaentladevorrichtung unterzogen. Die Coronabehandlung vermindert die Hydrophobie der Polyesterfolienoberfläche, wodurch die wäßrige Beschichtung die Oberfläche besser benetzen kann. Dadurch wird die Haftung der Copolyesterbeschichtung an der Oberfläche verbessert. Während des Streckens und/oder Thermofixierens wird die Copolyesterbeschichtung Temperaturen oberhalb ihres Schmelzpunktes ausgesetzt und dadurch vergleichmäßigt.

Die erfindungsgemäße Polyesterbeschichtung wird als wäßrige Lösung mit einem Feststoffgehalt von etwa 0,5 bis 15%, vorzugsweise etwa 3 bis 10%, auf die Trägerfolie aufgebracht. Der Feststoffgehalt ist so bemessen, daß sich eine Trockenschichtdicke im Bereich von etwa 0,0025 bis 0,254 »m ergibt; in Gewicht ausgedrückt bedeutet das einen Feststoffgehalt von 0,00305 bis 0,305 g/m². Bevorzugt hat die getrocknete Copolyestergrundierung eine Dicke im Bereich von 0,02 bis 0,051 »m.

Die Beschichtung kann ein- oder beidseitig auf die Folie aufgebracht werden. Es ist aber auch möglich, eine Seite der Folie mit der Copolyesterbeschichtung und die Gegenseite mit einer anderen Beschichtung zu versehen, wie z.B. einer wärmehärtenden Acryl- oder Methacrylbeschichtung gemäß US-PS 4,214,035. Gelegentlich kann es auch wünschenswert sein, in den Ansatz der Copolyesterbeschichtung ein Härtungsmittel einzubeziehen, z.B. etwa 1 bis 20 Gew.-% eines Melamin-oder Harnstoff-Formaldehyd-Kondensationsproduktes, wodurch die Eigenschaften der Grundierbeschichtung weiter modifiziert werden. Der Beschichtungsansatz kann weiterhin andere bekannte Zusätze enthalten, wie z.B. Antistatika, Netzmittel, Tenside, pH-Regulatoren, Antioxidantien, Farbstoffe, Pigmente, Anti-Blockmittel, wie z.B. kolloidales SiO₂, usw.

Die erfindungsgemäßen Copolyesterbeschichtungen haben eine ausgezeichnete Wärmestabilität. Der bei der Herstellung der Folien anfallende Abfall an beschichteter Folie kann daher mit frischem Polymeren, z.B. Polyesterpolymeren, gemischt, wieder geschmolzen und zur Herstellung von orientierter Folie erneut in den Folienextruder eingefüllt werden. Auf diese Art hergestellte Folien mit einem Gehalt von bis zu etwa 70 Gew.-% an Regenerat aus bereits beschichtetem Abfall erweisen sich als gut in Qualität, Farbe und Aussehen und zeigen höchstens einen sehr geringen wahrnehmbaren Abbau der Eigenschaften durch die von der Beschichtung herrührende Verunreinigung. Die beschichtete Folie dieser Erfindung bietet also dem Folienhersteller einen deutlichen wirtschaftlichen Vorteil gegenüber vielen anderen beschichteten Folien, wie z.B. Folien, die mit Vinylidenchlorid enthaltenden Polymeren beschichtet sind wie in US-PSen 2,627,088 und 2,698,240 beschrieben, die zum Polymerenabbau und zur Verfärbung neigen, wenn sie wie oben angegeben wiedergewonnen werden.

Eine mit der erfindungsgemäßen Copolyesterbeschichtung versehene Kunststoffolie, z.B. eine Polyesterfolie, eignet sich ausgezeichnet als Träger für die Herstellung von metallisierten Polyesterfolien. Derartige Folien werden nach bekannten Techniken hergestellt. Es wird beispielsweise auf einer Oberfläche der beschichteten Polyesterfolie eine Metallbeschichtung erzeugt, indem man nach einer Vakuumaufdampftechnik einen Strom von Metalldampf oder Metallatomen auf die Folienoberfläche richtet. Zu diesem Zweck wird das Metall entweder im Hochvakuum, vorzugsweise zwischen etwa 0,133 und 0,00133 Pa (10⁻³ und 10⁻⁵ Torr), auf eine Temperatur oberhalb seines Schmelzpunktes erhitzt, so daß der Dampfdruck des Metalls über etwa 1,33 Pa (10⁻² Torr) liegt, oder das Metall wird mit Ionen beschossen, wobei der Festkörper Metall durch das "Sputter-Verfahren" zerstäubt wird. Sobald diese Bedingungen eingetreten sind, verdampft oder zerstäubt das Metall und sendet in alle Richtungen Metalldampf oder Metallatome aus. Diese Dämpfe oder Atome treffen auf die Folienoberfläche auf, wo sie kondensieren und dabei eine dünne Metallschicht auf der Folie bilden. Für dieses Verfahren können Zink, Nickel, Silber, Kupfer, Gold, Indium, Zinn, Edelstahl, Chrom, Titan und bevorzugt Aluminium sowie die Oxide dieser Metalle angewendet werden.

Die Dicke der aufgebrachten Metallschicht richtet sich nach der Endverwendung der metallisierten Folie. Die Dicken von Aluminium liegen für Verpackungszwecke bei etwa 30-60 nm (300 bis 600 Å), während für den Einsatz in getönten Sonnelfiltern im allgemeinen Dicken unter 10 nm (100 Å) in Frage kommen.

Die metallbeschichtete Folie nach dieser Erfindung wird hauptsächlich als Verpackungs- und Etikettierungsmaterial eingesetzt. Die nicht mit Metall beschichtete Seite der Folie kann mit einem heißsiegelfähigen Material beschichtet werden, wie es in der GB-PS 1,249,015 beschrieben ist, oder sie kann mit einer Sperrschicht gegen Feuchtigkeit auf Basis von polymerisierten Vinylidenchlorid-copolymeren versehen werden. Die metallisierte Seite kann mit bestimmten Druckfarben bedruckt werden, so daß man die bedruckte Packung oder das bedruckte Etikett erhält.

Die folgenden Beispiele sollen die Erfindung näher erläutern, jedoch nicht einschränken.

### Beispiel 1

a) Zubereitung des Copolyesters
   Ein in Wasser dispergierbarer Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:
   Ein 2 l fassender Reaktionsbehälter aus Edelstahl, der mit einem Ankerrührer, einem Thermoelement zur Messung der Temperatur des Gefäßinhalts, einer 45,7 cm (18 Zoll)-Claisen/Vigreux-Destillationskolonne mit Kühler und Vorlage, einer Einlaßöffnung und einem Heizmantel ausgerüstet war, wurde auf 190^{o}C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer (Na₂CO₃ · 10 H₂O - 0,439 g) und ein Umesterungskatalysator (Mn (OAc)₂ · 4 H₂O - 0,563 g) in das Gefäß gegeben. Das Gemisch wurde unter Rühren erhitzt, wobei Methanol abdestillierte. Während der Destillation wurde die Gefäßtemperatur allmählich auf 250^{o}C erhöht. Als das Gewicht des Destillates der theoretischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung (CO₂) ein. Die CO₂-Entwicklung ließ nach etwa 10 min nach. Es wurde dann ein Unterdruck von 32000 Pa (240 mm Hg) gezogen und der Polykondensationskatalysator (0,563 g Sb₂O₃ in einer Ethylenglykolaufschlämmung) hinzugefügt. Das Reaktionsgemisch wurde unter Beibehaltung des Unterdruckes von 32000 Pa (240 mm Hg) 10 min gerührt, wonach der Druck in Stufen von jeweils 1333 Pa (10 mm Hg)/min von 32000 Pa (240 mm Hg) auf 2666 Pa (20 mm Hg) weiter reduziert wurde. Sobald das Vakuum im System auf 2666 Pa (20 mm Hg) reduziert war, wurde die Gefäßtemperatur mit einer Geschwindigkeit von 2^{o}C/min von 253^{o}C auf 290^{o}C angehoben. Bei einer Temperatur von 290^{o}C im Gefäß wurde die Rührergeschwindigkeit gedrosselt und der Druck auf höchstens 13,33 Pa (0,1 mm Hg) gesenkt. Zu diesem Zeitpunkt wurde eine Amperemeterablesung des Rührermotors vorgenommen. Die Viskosität des Polymeren wurde gesteuert, indem man die Polykondensation nach festen Werten für die Veränderung in der Amperezahl des Rührermotors von (jeweils) 2,3 A ablaufen ließ. Als das gewünschte Mol-Gewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.
   Aus dem hergestellten Copolyester wurde eine wäßrige Dispersion hergestellt, indem 60 g des Copolyesters in Form eines Granulats unter kräftigem Rühren in 1 l Wasser gegeben wurden, das in einem 2 l fassenden Gefäß aus Edelstahl auf einer Temperatur von etwa 90^{o}C gehalten wurde. Nach vollständigem Dispergieren des Copolyesters wurde auf Raumtemperatur abgekühlt und filtriert, wonach unter Rühren 11,2 g einer 50%igen wäßrigen Dispersion von kolloidalem SiO₂ zugegeben wurden. Diese Dispersion wurde nach dem folgenden Verfahren als Beschichtung auf eine Polyesterfolie aufgebracht:
b) Beschichtung der Folie
   Eine aus Polyethylenterephthalat hergestellte Schmelze wurde durch eine Breitschlitzdüse auf eine Gießwalze extrudiert, deren Temperatur auf etwa 20^{o}C gehalten wurde. Sie erstarrte dort zu einer gegossenen Folie. Die gegossene Folie wurde im Streckverhältnis von ungefähr 3,6 : 1 längsgestreckt, wobei sie auf einer Temperatur von 80^{o}C gehalten wurde.
   Die längsgestreckte Folie wurde in einem Coronaentladegerät behandelt und danach mit der gemäß Beispiel 1 hergestellten Copolyesterdispersion nach dem Reversgravurverfahren (siehe "Adhäsion" (1977), 189 ff, Hugo Klein) beschichtet.
   Die längsgestreckte, coronabehandelte und beschichtete Folie wurde bei etwa 100^{o}C getrocknet. Anschließend wurde die Folie im Streckverhältnis 3,6 : 1 zu einer biaxial gestreckten Folie mit einer Dicke von etwa 75 »m quergestreckt. Die biaxial gestreckte Folie wurde bei 230^{o}C thermofixiert. Das Trockengewicht der Beschichtung betrug ca. 0,030 g/m², das entspricht einer Beschichtungsdicke von ca. 0,025 »m. Zwei Proben der so hergestellten einseitig beschichteten Folie wurden in einen Vakuumlaborbeschichter eingebracht, und zwar so, daß bei der einen Probe die beschichtete und bei der anderen Probe die unbeschichtete Seite metallisiert wurde. Die Vakuumkammer wurde bis auf unter 0,013 Pa (10⁻⁴ Torr) evakuiert, und von einem Wolframfaden wurden etwa 50 nm (500 Å) Aluminium sowohl auf die unbeschichtete als auch auf die beschichtete Probe aufgedampft.
   Innerhalb von 30 sec nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und in etwa dem gleichen Druck leicht über die Metalloberfläche gerieben. Das "Abriebverhalten" der beschichteten Folie wurde von 1 bis 10 eingestuft, wobei mit 1 "keine Verbesserung" gegenüber unbeschichteter Polyesterfolie und mit 10 "kein Abrieb" bezeichnet wurden. Die Ergebnisse sind in den Tabellen zusammengefaßt. Die als Vergleich dienende unbeschichtete Polyesterfolie wird im Abriebtest unter V geführt. Als Ergebnis der Abriebmessung zeigte sich, daß die erfindungsgemäße Folie des Beispiels 1 die Einstufung 9 erhielt, während die Vergleichsfolie V definitionsgemäß nur mit 1 bewertet wurde.

### Vergleichsbeispiele 1 bis 10

Zum Vergleich wurden zehn weitere Copolyester mit Zusammensetzungen, die nicht mit dieser Erfindung übereinstimmen, wie in den Tabellen I und II angegeben auf die Polyethylenterephthalatfolien aufgebracht, die wie in Beispiel 1 beschrieben hergestellt, metallisiert und geprüft wurden. Diese Prüfungsergebnisse sind in den Tabellen I und II aufgeführt.

**Tabelle I**

| Daten für die Metallhaftung auf verschiedenen Beschichtungen | | | | | | | |
|---|---|---|---|---|---|---|---|
| Vergleichsbeispiel | 1 | 2 | 3 | 4 | 5 | 6 | 7 |
| Metallhaftung¹ | 1 | 1 | 1 | 3 | 3 | 1 | 1 |

| Zusammensetzung | | | | | | | |
|---|---|---|---|---|---|---|---|
| Mol-% Terephthalat² | 70 | 40 | 70 | 70 | 70 | 73 | 73 |
| Mol-% Isophthalat | 20 | 0 | 0 | 0 | 0 | 0 | 0 |
| Mol-% Adipat | 0 | 20 | 0 | 0 | 0 | 20 | 0 |
| Mol-% Malonat | 0 | 0 | 0 | 20 | 0 | 0 | 0 |
| Mol-% SIPA³ | 10 | 40 | 10 | 10 | 10 | 7 | 7 |
| Mol-% Succinat | 0 | 0 | 20 | 0 | 0 | 0 | 0 |
| Mol-% Azelat | 0 | 0 | 0 | 0 | 20 | 0 | 0 |
| Mol-% Sebacat | 0 | 0 | 0 | 0 | 0 | 0 | 0 |
| Mol-% Glutarat | 0 | 0 | 0 | 0 | 0 | 0 | 20 |
| Mol-% Ethylenglykol | 100 | 100 | 100 | 100 | 100 | 100 | 100 |

| | | | | | | | |
|---|---|---|---|---|---|---|---|
| Anmerkungen zu den Tabellen ¹ "Metallabrieb" (Einstufung 1 entspricht unbeschichtetem PET, Einstufung 10 bedeutet "kein Abrieb"); | | | | | | | |
| ² alle Säuren sind in Form ihrer Dimethylester anwesend; | | | | | | | |
| ³ SIPA = Natriumsalz des Dimethyl-5-sulfoisophthalats. | | | | | | | |

**Tabelle II**

| Daten für die Metallhaftung auf verschiedenen Beschichtungen | | | |
|---|---|---|---|
| Vergleichsbeispiel | 8 | 9 | 10 |
| Metallhaftung¹ | 3 | 3 | 3 |

| Zusammensetzung | | | |
|---|---|---|---|
| Mol-% Terephthalat² | 30 | 47 | 0 |
| Mol-% Isophthalat | 60 | 23 | 45 |
| Mol-% Adipat | 0 | 20 | 0 |
| Mol-% Malonat | 0 | 0 | 45 |
| Mol-% SIPA³ | 10 | 10 | 10 |
| Mol-% Succinat | 0 | 0 | 0 |
| Mol-% Azelat | 0 | 0 | 0 |
| Mol-% Sebacat | 0 | 0 | 0 |
| Mol-% Glutarat | 0 | 0 | 0 |
| Mol-% Ethylenglykol | 100 | 100 | 100 |

| | | | |
|---|---|---|---|
| Anmerkungen zu den Tabellen ¹ "Metallabrieb" (Einstufung 1 entspricht unbeschichtetem PET, Einstufung 10 bedeutet "kein Abrieb"); | | | |
| ² alle Säuren sind in Form ihrer Dimethylester anwesend; | | | |
| ³ SIPA = Natriumsalz des Dimethyl-5-sulfoisophthalats. | | | |

Aus den Tabellen wird ersichtlich, daß nur die erfindungsgemäße Folie des Beispiels 1 eine deutliche Verbesserung der Metallhaftung gegenüber unbeschichteter Polyesterfolie (Vergleich) und auch gegenüber Folien mit bestimmten anderen, nicht mit diesen Parametern übereinstimmenden Copolyesterbeschichtungen aufweist. Für die Zwecke dieser Erfindung gelten Folien, die im Haftungstest Ergebnisse von 3 und darunter zeigen, als nicht mit dieser Erfindung übereinstimmend.

## Patentansprüche

1. Selbsttragende orientierte Folie aus thermoplastischem Kunststoff, welche auf wenigstens einer ihrer beiden Oberflächen eine durchgehende Polyesterbeschichtung trägt, die die Haftung dieser Folie gegenüber Beschichtungen, die nach dem Metallisierungsverfahren aufgebracht werden, verbessert, wobei die Folie durch Schmelzextrusion zunächst als amorphe Kunststoffolie hergestellt wird, die danach durch Strecken in wenigstens eine Richtung orientiert wird, und wobei die Polyesterbeschichtung als wäßrige Dispersion auf die Folie entweder vor der Streckung oder nach der Streckung in eine Richtung, aber vor der Streckung in eine andere Richtung, aufgebracht wird, dadurch gekennzeichnet, daß die Polyesterbeschichtung aus dem Kondensationsprodukt der folgenden Monomeren beziehungsweise deren zur Bildung von Polyestern befähigten Derivaten besteht:
A) bis zu 95 Mol-% Isophthalsäure;
B) 5 bis 15 Mol-% eines Sulfomonomeren enthaltend eine Alkalimetallsulfonatgruppe an dem aromatischen Teil einer aromatischen Dicarbonsäure;
C) die zur Bildung von 100 Mol-% Kondensat notwendige stöchiometrische Menge wenigstens eines copolymerisierbaren aliphatischen oder cycloaliphatischen Glykols mit 2 bis 11 Kohlenstoffatomen;
wobei die Prozentangaben jeweils bezogen sind auf die Gesamtmenge der die Polyesterbeschichtung bildenden Monomeren, und die Polyesterbeschichtung eine Trockendicke aufweist im Bereich von 0,0025 bis 0,254 »m, bevorzugt von 0,02 bis 0,051 »m.

2. Folie nach Anspruch 1, dadurch gekennzeichnet, daß die Folie aus einem Kunststoff besteht, ausgewählt aus der Gruppe umfassend biaxial orientiertes Polyamid, biaxial orientiertes Polypropylen, biaxial orientiertes Polyethylenterephthalat, biaxial orientiertes Polycarbonat, bevorzugt biaxial orientiertes Polyethylenterephthalat.

3. Folie nach einem der Ansprüche 1 bis 2, dadurch gekennzeichnet, daß die Komponente B in einer Menge von 6,5 bis 12 Mol-% vorliegt und ausgewählt ist aus der Gruppe umfassend Natrium-Sulfoterephthalsäure, Natrium-5-Sulfoisophthalsäure,Natrium-Sulfophthalsäure,5-(p-Natriumsulfophenoxy)-Isophthalsäure,5-(Natriumsulfopropoxy)-Isophthalsäure bzw. deren zur Bildung von Polyestern befähigten Derivaten.

4. Folie nach einem der Ansprüche 1 bis 3, dadurch gekennzeichnet, daß die Polyesterbeschichtung besteht aus 90 Mol-% Isophthalsäure, 10 Mol-% Natriumsalz der 5-Sulfoisophthalsäure bzw. deren zur Bildung von Polyester befähigten Derivaten und der zur Bildung von 100 Mol-% notwendigen stöchiometrischen Menge Ethylenglykol.

5. Metallisierte Folie umfassend eine Folie nach einem der Ansprüche 1 bis 4, dadurch gekennzeichnet, daß auf der mit der Polyesterbeschichtung versehenen Seite der Folie ein Metall oder ein Metalloxid aufgebracht ist, bevorzugt nach der Technik der Vakuumaufdampfung.

6. Metallisierte Folie nach Anspruch 5, dadurch gekennzeichnet, daß das aufgebrachte Metall ein Metall ist, ausgewählt aus der Gruppe Zink, Nickel, Silber, Kupfer, Gold, Indium, Zinn, Edelstahl, Chrom, Titan und Aluminium, bevorzugt Aluminium.

7. Metallisierte Folie nach Anspruch 5 oder 6, dadurch gekennzeichnet, daß die Dicke der auf die Polyesterbeschichtung aufgebrachten Metallschicht im Bereich von 2,5 bis 200 nm (25 bis 2000 Å) liegt.

## Claims

1. Self-supporting oriented film made of a thermoplastic and having a continuous polyester coating on at least one surface, by which coating the adhesion of said film towards coatings applied by metallizing is improved, said film being prepared by initially melt extruding an amorphous plastic film which is thereafter oriented by stretching in at least one direction, said polyester coating being applied to said film as an aqueous dispersion prior to stretching in one direction or subsequent to stretching in one direction but prior to stretching in another direction, characterized in that said polyester coating comprises the condensation product of the following monomers or their polyester-forming derivatives:
A) 65 to 95 mole percent of isophthalic acid;
B) 5 to 35 mole percent of at least one sulfomonomer containing an alkali metal sulfonate group attached to the aromatic nucleus of an aromatic dicarboxylic acid;
C) the stoichiometric quantity necessary to form 100 mole percent of condensate, of at least one copolymerizable aliphatic or cycloaliphatic glycol having 2 to 11 carbon atoms,
the percentages relating, in each case, to the total quantity of monomers forming the polyester coating, and said polyester coating having a dry thickness in the range of 0.0025 to 0.254 »m, preferably of 0.02 to 0.051 »m.

2. The film according to claim 1, wherein said film comprises a plastic material selected from the group consisting of biaxially oriented polyamide, biaxially oriented polypropylene, biaxially oriented polyethylene terephthalate and biaxially oriented polycarbonate, preferably biaxially oriented polyethylene terephthalate.

3. The film according to any of claims 1 and 2, wherein said component B is present in a quantity of 6.5 to 12 mole percent and is selected from the group consisting of sodium sulfoterephthalic acid, sodium 5-sulfoisophthalic acid, sodiumsulfophthalic acid, 5-(p-sodiumsulfophenoxy)-isophthalic acid, 5-(sodiumsulfopropoxy)-isophthalic acid, and their polyester-forming derivatives.

4. The film according to any of claims 1 to 3, wherein said polyester coating comprises 90 mole percent of isophthalic acid, 10 mole percent of the sodium salt of 5-sulfoisophthalic acid, or their polyester-forming derivatives, and ethylene glycol in a stoichiometric quantity necessary to form 100 mole percent.

5. A metallized film comprising the film according to any of claims 1 to 4, wherein a metal or metal oxide is applied onto that side of the film which is provided with said polyester coating, preferably by a vacuum deposition technique.

6. The metallized film according to claim 5, wherein the metal applied thereto is selected from the group consisting of zinc, nickel, silver, copper, gold, indium, tin, stainless steel, chromium, titanium and aluminum, preferably aluminum.

7. The metallized film according to claim 5 or 6, wherein the thickness of the metal layer applied onto said polyester coating is in the range from 2.5 to 200 nm (25 to 2000 Å).

## Revendications

1. Film autoportant orienté, en matière thermoplastique, recouvert sur au moins une de ses deux faces d'une couche de polyester continue améliorant l'adhérence de ce film pour les revêtements déposés par le procédé de métallisation, ledit film étant fabriqué par extrusion à l'état fondu, d'abord à l'état de film plastique amorphe, que l'on oriente ensuite par étirage suivant au moins une direction, et la couche de polyester étant déposée sur le film à l'état de dispersion aqueuse, soit avant soit après l'étirage suivant une direction, mais avant l'étirage suivant l'autre direction, caractérisé en ce que la couche de polyester se compose du produit de condensation des monomères suivants ou de leurs dérivés aptes à former des polyesters:
A) jusqu'à 95 % en moles d'acide isophtalique,
B) de 5 à 15 % en moles d'un monomère sulfo comportant un groupe sulfonate de métal alcalin sur la partie aromatique d'un acide dicarboxylique aromatique,
C) la quantité stoechiométrique, nécessaire à la formation de 100 % en moles de condensat, d'au moins un glycol copolymérisable aliphatique ou cycloaliphatique en C₂₋₁₁,
les pourcentages étant chaque fois rapportés à la quantité totale des monomères formant la couche polyester, et le revêtement polyester présentant une épaisseur à sec comprise entre 0,0025 et 0,254 »m, de préférence entre 0,02 et 0,051 »m.

2. Film selon la revendication 1, caractérisé en ce que ledit film est à base d'une matière synthétique choisie dans le groupe formé par un polyamide orienté biaxialement, un polypropylène orienté biaxialement, un poly(téréphtalate d'éthylène) orienté biaxialement, un polycarbonate orienté biaxialement, de préférence un poly(téréphtalate d'éthylène) orienté biaxialement

3. Film selon la revendication 1 ou 2, caractérisé en ce que le constituant B est présent à raison de 6,5 à 12 % en moles et est choisi dans le groupe comprenant un sel de sodium de l'acide sulfotéréphtalique, un sel de sodium de l'acide 5-sulfoisophtalique, un sel de sodium de l'acide sulfophtalique, l'acide 5-(p-sodiosulfophénoxy)isophtalique, l'acide 5-(sodiosulfopropoxy)isophtalique, ou leurs dérivés aptes à former des polyesters.

4. Film selon une quelconque des revendications 1 à 3, caractérisé en ce que la couche polyester se compose de 90 % en moles d'acide isophtalique, 10 % en moles de sel de sodium de l'acide 5-sulfoisophtalique, ou de leurs dérivés aptes à former des polyesters, et de la quantité stoechiométrique d'éthylèneglycol nécessaire à la formation de 100 % en moles de condensat.

5. Film métallisé comprenant un film selon une quelconque des revendications 1 à 4, caractérisé en ce qu'on dépose un métal ou un oxyde métallique sur la face du film pourvue de la couche de polyester, de préférence par la technique de dépôt sous vide à partir de l'état vapeur.

6. Film métallisé selon la revendication 5, caractérisé en ce que le métal déposé est un métal choisi parmi les métaux suivants: zinc, nickel, argent, cuivre, or, indium, étain, acier spécial, chrome, titane et aluminium, de préférence aluminium.

7. Film métallisé selon la revendication 5 ou 6, caractérisé en ce que l'épaisseur de la couche métallique déposée sur le revêtement polyester est comprise entre 2,5 et 200 nm (25 à 2000 Å).
